# EUROPÄISCHE PATENTANMELDUNG

(11) **EP 1 056 036 A2**
(43) Veröffentlichungstag der Anmeldung: **29.11.2000**
(21) Anmeldenummer: 00106464.1
(22) Anmeldetag: 24.03.2000
(51) Int. Cl.: G06K 7/10, G06K 7/12

(54) **Verfahren zur Detektion von Lumineszenzmarken**

(30) Priorität: 27.05.1999 DE 19924257
(71) Anmelder: Sick AG, 79183 Waldkirch, Breisgau (DE)
(72) Erfinder: Hirt, Günter, 77790 Steinach (DE); Haas, Peter, 79341 Kenzingen (DE)
(74) Vertreter: Manitz, Finsterwald & Partner

(57) **Zusammenfassung**

Die Erfindung betrifft ein Verfahren zur Detektion von Lumineszenzmarken, wobei elektromagnetische Sendestrahlung in einen Überwachungsbereich ausgesendet wird, wobei ferner elektromagnetische Remissionsstrahlung, die von einer im Überwachungsbereich befindlichen Lumineszenzmarke remittiert wird, empfangen wird, wobei ferner in Abhängigkeit von der empfangenen Remissionastrahlung ein Empfangssignal erzeugt wird, wobei ferner das Empfangssignal ausgewertet wird, und wobei die Sendestrahlung und die Remissionastrahlung unterschiedliche Wellenlängen besitzen. Für einen Detektionsvorgang werden mehrere Empfangssignale erzeugt, die mehreren voneinander verschiedenen Empfangswellenlängen entsprechen. Zur Feststellung des Vorhandenseins einer Lumineszenzmarke innerhalb des Überwachungsbereichs werden die mehreren Empfangssignale ausgewertet.

## Beschreibung

Die Erfindung betrifft ein Verfahren zur Detektion von Lumineszenzmarken, wobei elektromagnetische Sendestrahlung in einen Überwachungsbereich ausgesendet wird, wobei ferner elektromagnetische Remissionsstrahlung, die von einer im Überwachungsbereich befindlichen Lumineszenzmarke remittiert wird, empfangen wird, wobei ferner in Abhängigkeit von der empfangenen Remissionsstrahlung ein Empfangssignal erzeugt wird, wobei ferner das Empfangssignal ausgewertet wird, und wobei die Sendestrahlung und die Remissionsstrahlung unterschiedliche Wellenlängen besitzen.

Die Erfindung betrifft weiterhin einen entsprechenden Lumineszenztaster mit wenigstens einem Sender zum Aussenden einer elektromagnetischen Sendestrahlung in einen Überwachungsbereich, wenigstens einem photoelektrischen Empfänger zum Empfang einer von einer im Überwachungsbereich befindlichen Lumineszenzmarke remittierten elektromagnetischen Remissionsstrahlung, und einer Auswerteschaltung zur Auswertung eines von dem Empfänger abgegebenen Empfangssignals.

Bei derartigen Verfahren bzw. Lumineszenztastern wird die im Überwachungsbereich befindliche Lumineszenzmarke durch die Sendestrahlung zur Abgabe von Remissionsstrahlung angeregt, die seitens des Lumineszenztasters zu einem Empfangssignal führt. Damit der Empfänger bzw. das Empfangssignal nicht unbeabsichtigt durch die Sendestrahlung beeinflußt wird, sind für die Sendestrahlung und die Remissionastrahlung unterschiedliche Wellenlängen vorgesehen. Beispielsweise kann es sich bei der Sendestrahlung um eine Wellenlänge des Ultravioletten handeln, während der Empfänger im Sichtbaren detektiert.

Nachteilig an diesem Detektionsprinzip ist, daß eine hierfür vorgesehene Lumineszenzmarke vergleichsweise leicht unbeabsichtigt mit einer anderen Lumineszenzmarke verwechselt werden kann. Insbesondere können die Lumineszenzmarken nachgeahmt werden, um eine Verwechslung mit der ursprünglich vorgesehenen Lumineszenzmarke gezielt herbeizuführen.

Beispielsweise läßt sich der Einsatz dieses bekannten Detektionsprinzips zur Verhinderung von Produktpiraterie bei Markenbekleidung dadurch untergraben, daß ein gefälschtes Bekleidungsstück mit einer nachgeahmten Lumineszenzmarke versehen wird, also mit einer Lumineszenzmarke, die bei Anregung im ultravioletten Wellenlängenbereich sichtbares Licht remittiert. Daß das Original-Bekleidungsstück mit einer solchen Lumineszenzmarke markiert ist, ist für den Fälscher ohne weiteres ersichtlich, da er das Bekleidungsstück lediglich mit einer frei erhältlichen UV-Lampe anstrahlen und gleichzeitig beobachten muß. Die Täuschung bekannter Detektionsverfahren bzw. Lumineszenztaster ist also unerwünscht einfach.

Es ist eine Aufgabe der Erfindung, ein Lumineszenztastverfahren und einen Lumineszenztaster zu schaffen, die unterschiedliche Lumineszenzmarken besser unterscheiden können und die eine höhere Nachahmungssicherheit bieten.

Diese Aufgabe wird für ein Verfahren der eingangs genannten Art dadurch gelöst, daß für einen Detektionsvorgang mehrere Empfangssignale erzeugt werden, die mehreren voneinander verschiedenen Empfangswellenlängen entsprechen, und daß zur Feststellung des Vorhandenseins einer Lumineszenzmarke innerhalb des Überwachungsbereichs die mehreren Empfangssignale ausgewertet werden.

Bei der Erfindung wird also auf mehreren unterschiedlichen Empfangswellenlängen detektiert, und nur wenn bestimmte Feststellungskriterien für mehrere den unterschiedlichen Empfangswellenlängen entsprechende Empfangssignale erfüllt sind, wird ein entsprechendes Gegenstandsfeststellungssignal erzeugt. Somit unterscheidet sich das erläuterte Verfahren von den bekannten Lumineszenztastverfahren, bei denen allenfalls eine Bewertung der Gesamtleistung des Empfangssignals innerhalb eines eingestellten Wellenlängenbereichs erfolgt, ansonsten jedoch keine besondere Zuordnung zu einer bestimmten Empfangswellenlänge vorgesehen ist.

Als ein einziger Detektionsvorgang, für den mehrere Empfangssignale erzeugt werden, ist im Rahmen der Erfindung sowohl ein gleichzeitiges Empfangen der entsprechenden Empfangswellenlängen anzusehen, als auch ein zeitlich aufeinanderfolgendes Durchlaufen aller vorgesehenen Empfangswellenlängen.

Für die Feststellung des Vorhandenseins einer Lumineszenzmarke können die mehreren Empfangssignale rechnerisch ausgewertet werden, beispielsweise miteinander oder mit Grenzwerten verglichen werden.

Ein wesentlicher Vorteil der Erfindung liegt darin, daß mit geringem meßtechnischen und verfahrensmäßigen Aufwand materialspezifische Remissionsspektren aufgelöst werden können. Insbesondere können mehrere verschiedene Lumineszenzmarken nicht nur erfaßt, sondern auch voneinander unterschieden werden.

Eine vorteilhaft einfache Zuordnung von verschiedenen Lumineszenzmarken zu den mehreren beobachteten Empfangswellenlängen ergibt sich, wenn jede Empfangswellenlänge genau der Remissionswellenlänge einer einzigen zugeordneten Lumineszenzmarke entspricht.

Alternativ hierzu kann eine Empfangswellenlänge auch mehreren verschiedenen Lumineszenzmarken zugeordnet sein, sofern diese sich durch einen Unterschied in einer weiteren Remissionswellenlänge voneinander unterscheiden. Beispielsweise kann zwischen zwei Lumineszenzmarken unterschieden werden, die zwar beide bei Anregung im Ultravioletten jeweils dieselbe Remissionswellenlänge im Sichtbaren abgeben, die jedoch gleichzeitig zusätzlich jeweils eine weitere Wellenlänge remittieren, wobei diese beiden zusätzlichen Remissionswellenlängen die beiden Lumineszenzmarken voneinander unterscheiden.

Somit ermöglicht das erläuterte Verfahren eine hohe Selektivität, d.h. ein hohes Unterscheidungsvermögen bei Lumineszenzmarken, die sich hinsichtlich ihres Remissionsspektrums lediglich teilweise oder geringfügig voneinander unterscheiden. Die Erfindung erlaubt es also, mehrere verschiedene Lumineszenzmarken zur Codierung von unterschiedlichen Gegenständen zu verwenden.

Vor allem trägt die Erfindung dazu bei, daß die Nachahmung von Lumineszenzmarken, die zur Kennzeichnung von Markenartikeln verwendet werden, erheblich erschwert wird. Für den Nachahmer ist nämlich nicht ersichtlich, welche der Remissionswellenlängen der Original-Lumineszenzmarke tatsächlich zur Kennzeichnung dienen. Es ist insbesondere möglich, daß der Nachahmer eine Remissionswellenlänge im Sichtbaren identifiziert und überhaupt nicht erkennt, daß weitere, insbesondere in einem anderen Spektralbereich gelegene Remissionswellenlängen existieren und zur Kennzeichnung verwendet werden. Selbst bei einem systematischen Empfang in allen Spektralbereichen ist eine ununterscheidbare Nachahmung nicht ohne weiteres möglich, da die der Lumineszenzmarke jeweils zugeordnete Wellenlänge der Sendestrahlung nicht ohne weiteres bekannt ist.

Die Auswertung der mehreren Empfangssignale, die bei Vorhandensein eine Lumineszenzmarke innerhalb des Überwachungsbereichs letztlich zu einem Gegenstandsfeststellungssignal führen soll, kann beispielsweise auf eine der folgenden Weisen erfolgen:
a) Es wird überprüft, ob die Amplituden der Empfangssignale jeweils einen zugeordneten vorbestimmten Grenzwert überschreiten oder unterschreiten, oder ob die Amplituden innerhalb eines jeweils zugeordneten Bereichs liegen.
b) Für die Amplituden der mehreren Empfangssignale wird überprüft, ob sie einen gemeinsamen vorbestimmten Grenzwert überschreiten oder unterschreiten, oder ob sie innerhalb eines gemeinsamen Bereichs liegen.
c) Es wird überprüft, ob die Amplitude wenigstens eines der mehreren Empfangssignale einen vorbestimmten Grenzwert überschreitet oder unterschreitet, oder ob die Amplitude wenigstens eines Empfangssignals innerhalb eines vorbestimmten Bereichs liegt.
d) Es wird überprüft, ob das Verhältnis der Amplituden zweier Empfangssignale einen vorbestimmten Grenzwert überschreitet oder unterschreitet, oder ob dieses Verhältnis innerhalb eines bestimmten Bereichs liegt.
   Falls für einen Detektionsvorgang mehr als zwei verschiedene Empfangswellenlängen untersucht bzw. mehr als zwei entsprechende Empfangssignale erzeugt werden, es ist möglich, diese Überprüfung des Amplitudenverhältnisses für mehrere, insbesondere für alle möglichen Paare der mehreren Empfangssignale durchzuführen.

Unter Berücksichtigung der vorstehend erläuterten Grenzwertüberprüfungen kann also untersucht werden, ob die betreffende Lumineszenzmarke in allen der vorgesehenen Empfangswellenlängen abstrahlt, d.h. ob alle entsprechenden Empfangssignale detektiert werden können.

Die mehreren Empfangssignale können auch dahingehend ausgewertet werden, für welche der Empfangswellenlängen ein ausreichendes Empfangssignal erhalten wird bzw. für welche der Empfangswellenlängen kein ausreichendes Empfangssignal detektiert werden kann. Ein solches Lumineszenztastverfahren ermöglicht eine systematische Unterscheidung zwischen verschiedenen charakteristischen Remissionsspektren bzw. Lumineszenzmarken, und es erlaubt die bereits erläuterte Verwendung der Lumineszenzmarken zur Codierung. Zur Realisierung dieses Prinzips ist es lediglich erforderlich, die Pigmentmischungen bzw. Luminophore der Lumineszenzmarken entsprechend zu variieren.

Das erläuterte Lumineszenztastverfahren kann mit einer breitbandigen Sendestrahlung durchgeführt werden. Um die Selektivität hinsichtlich verschiedener Lumineszenzmarken mit jeweils charakteristischem Remissionsspektrum noch weiter zu erhöhen, ist es jedoch auch möglich, eine den verschiedenen Lumineszenzmarken entsprechende charakteristische Sendestrahlung vorzusehen: Falls für einen Detektionsvorgang Sendestrahlung mehrerer diskreter, voneinander verschiedener Sendewellenlängen verwendet wird, kann beeinflußt werden, welche der Remissionswellenlängen der betreffenden Lumineszenzmarke überhaupt zur Abstrahlung angeregt werden.

Mit anderen Worten kann trotz Anregung einiger der Remissionswellenlängen verhindert werden, daß andere, grundsätzlich zugelassene Remissionswellenlängen der Lumineszenzmarke abstrahlen und dementsprechend empfangen werden. Die Vorsehung einer derartigen selektiven Remission durch selektive Anregung erhöht die Nachahmungssicherheit noch weiter, da allein durch Untersuchung einer Lumineszenzmarke nicht herausgefunden werden kann, bei welcher Remissionswellenlänge abgestrahlt werden soll und bei welcher Remissionswellenlänge gerade nicht abgestrahlt werden darf.

Damit bei der Vorsehung von mehreren Empfangswellenlängen und gegebenenfalls mehreren verschiedenen Sendewellenlängen keine unbeabsichtigte direkte Beeinflussung des Empfängers durch den Sender auftritt, sind die Empfangswellenlängen von der Wellenlänge bzw. den Wellenlängen der Sendestrahlung vorzugsweise jeweils verschieden.

Für die Umwandlung der Remissionsstrahlung einer im Überwachungsbereich befindlichen Lumineszenzmarke in wellenlängenspezifische Empfangssignale ist es möglich, die Remissionsstrahlung in entsprechende Empfangslichtwege aufzuteilen.

Es ist auch möglich, innerhalb eines einzigen Detektionsvorganges auf einer Vielzahl von Empfangswellenlängen zu detektieren, die innerhalb eines spektralen Empfangsbereichs einander wellenlängenmäßig kontinuierlich oder quasi-kontinuierlich, d.h. diskret einander eng benachbart, aufeinanderfolgen. In diesem Fall erfolgt die Auswertung der entsprechenden Empfangssignale dahingehend, daß der Amplitudenverlauf innerhalb des spektralen Empfangsbereichs untersucht wird. Für diese Ausführungsform des Lumineszenztastverfahrens wird also eine Art spektrometrische Erfassung und Auswertung der Remissionsstrahlung durchgeführt.

Sowohl die Sendestrahlung als auch die Remissionsstrahlung bzw. die Empfangswellenlängen können jeweils im ultravioletten, im sichtbaren oder im infraroten Wellenbereich liegen. Es ist auch möglich, daß die Sendewellenlängen oder die Empfangswellenlängen jeweils in mehreren der drei genannten Spektralbereiche liegen. Beispielsweise ist es hinsichtlich der erwünschten Nachahmungssicherheit besonders vorteilhaft, wenn eine Remissionswellenlänge - wie von den üblichen Lumineszenztastverfahren bekannt - im Sichtbaren liegt, während zusätzlich eine weitere Remissionswellenlänge im Ultravioletten oder im Infraroten, also in einem für das menschliche Auge nicht sichtbaren Spektralbereich liegt.

Schließlich ist festzuhalten, daß das erläuterte Lumineszenztastverfahren kompatibel hinsichtlich bislang üblicher Lumineszenzmarken mit lediglich einer einzigen Remissionswellenlänge ist.

Die Aufgabe der Erfindung wird für einen Lumineszenztaster der eingangs genannten Art dadurch gelöst, daß der oder die Empfänger zum selektiven Empfang mehrerer voneinander verschiedener, insbesondere diskreter Empfangswellenlängen sowie zur Erzeugung jeweils den verschiedenen Empfangswellenlängen entsprechender Empfangssignale ausgebildet ist.

Indem dieser Lumineszenztaster zum selektivern, d.h. unterscheidbaren Empfang von verschiedenen Empfangswellenlängen vorgesehen ist, ermöglicht er die Durchführung des vorstehend erläuterten Lumineszenztastverfahrens. Dementsprechend sind die bereits erläuterten Vorteile des Verfahrens auch auf diesen Lumineszenztaster übertragbar.

Die möglichen Ausführungsformen dieses Lumineszenztasters ergeben sich ebenfalls unmittelbar aus dem bereits erläuterten Verfahren. Insbesondere kann für jede Empfangswellenlänge ein eigener Empfänger vorgesehen sein. Beispielsweise ist es möglich, mehrere gleichartige, vergleichsweise breitbandige Empfänger mit verschiedenen, den Empfangswellenlängen entsprechenden Filtern zu versehen. Alternativ hierzu ist es möglich, die spektralen Empfangseigenschaften und somit die Empfangswellenlängen an einem einzigen Empfänger durch entsprechende elektronische Ansteuerung einzustellen bzw. auszuwählen. Auch ist ein sukzessiver Wechsel der Befilterung möglich.

In entsprechender Weise kann bei dem erläuterten Lumineszenztaster der Sender zum auswahlfähigen Aussenden mehrerer verschiedener Sendewellenlängen ausgebildet sein, um selektiv lediglich bestimmte der möglichen Remissionswellenlängen einer Lumineszenzmarke anzuregen. Für jede dieser selektiv auszuwählenden Sendewellenlängen kann ein eigener Sender vorgesehen sein, insbesondere mit einem entsprechenden Filter.

Weitere Ausführungsformen der Erfindung sind in den Unteransprüchen beschrieben.

Die Erfindung wird nachfolgend beispielhaft unter Bezugnahme auf die Zeichnungen erläutert; in diesen zeigen:
- Fig. 1: eine schematische Darstellung eines erfindungsgemäßen Lumineszenztasters in Triangulationsanordnung, und
- Fig. 2a bis 2c: die Amplitude der Sendestrahlung, die Amplitude der Remissionsatrahlung bzw. die Amplitude des Empfangssignals, jeweils aufgetragen gegen die Wellenlänge.

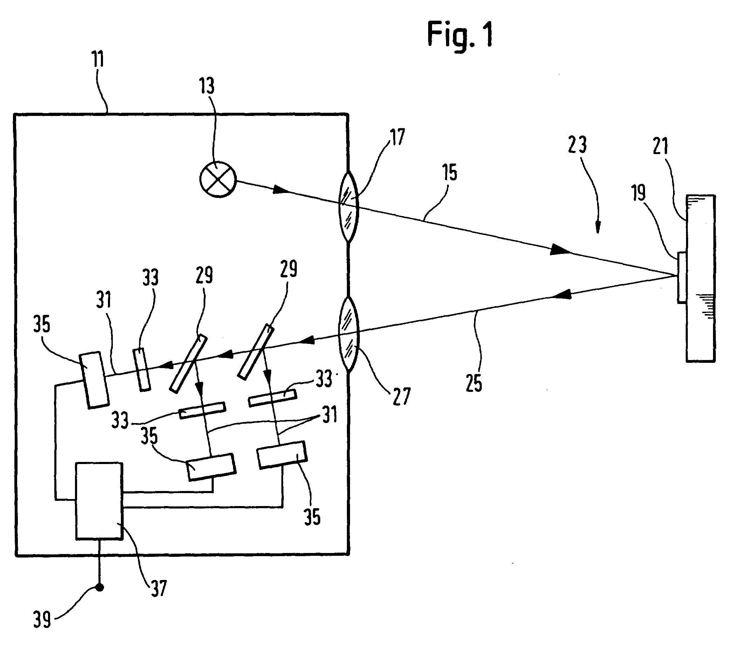

Der Lumineszenztaster gemäß Fig. 1 weist innerhalb eines Gehäuses 11 einen Sender 13 auf, der beispielsweise durch eine LED oder eine Laserdiode gebildet ist. Der Sender 13 emittiert einen Sendestrahl 15, der an der Gehäusewandung eine Sendelinse 17 durchläuft.

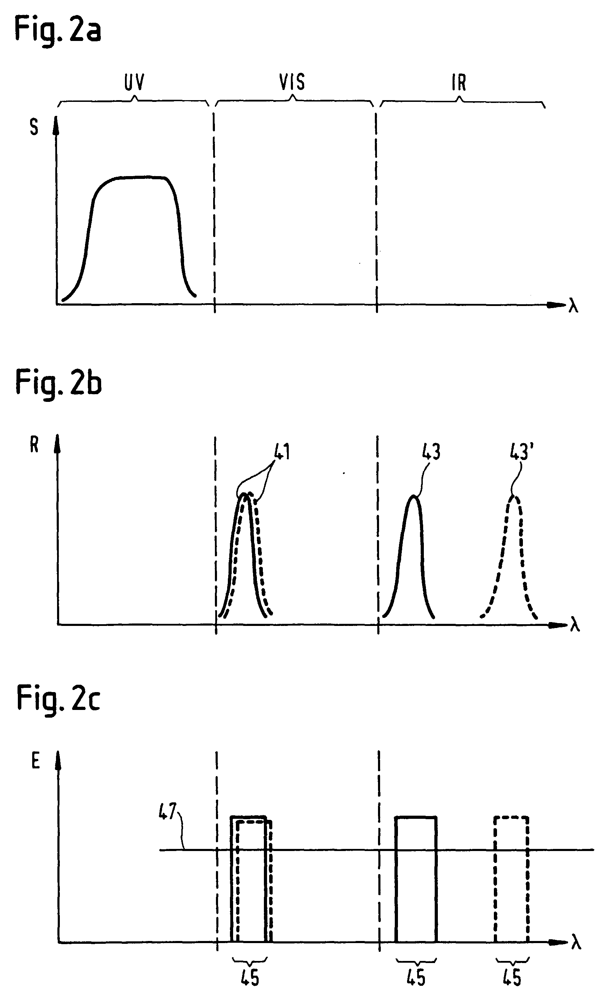

In Fig. 2a ist schematisch der Amplitudenverlauf S der Sendestrahlung 15 in Abhängigkeit von der Wellenlänge λ gezeigt. Fig. 2a zeigt ferner die Unterteilung des dargestellten Wellenlängenbereichs in die drei Spektralbereiche Ultraviolett (UV), sichtbares Licht (VIS) und Infrarot (IR). Die Sendestrahlung 15 liegt vergleichsweise breitbandig ausschließlich im UV-Bereich.

Wie aus Fig. 1 weiterhin ersichtlich, trifft der Sendestrahl 15 außerhalb des Lumineszenztasters auf eine Lumineszenzmarke 19, die an einem zu identifizierenden Gegenstand 21 angebracht ist, welcher innerhalb eines Überwachungsbereichs 23 angeordnet ist. Die Sendestrahlung 15 wird von der Lumineszenzmarke 19 in zwei von der Wellenlänge der Sendestrahlung 15 verschiedene Remissionswellenlängen umgewandelt und unter anderem als Remissionsstrahl 25 durch eine an der Gehäusewandung angeordnete Empfangslinse 27 in den Lumineszenztaster remittiert.

Fig. 2b zeigt schematisch für zwei Beispiele verschiedener Lumineszenzmarken 19 jeweils den Amplitudenverlauf R der Remissionsstrahlung 25 in Abhängigkeit von der Wellenlänge λ. Bei dem mit durchgezogenen Linien eingezeichneten ersten Beispiel liegt die eine Remissionswellenlänge 41 im sichtbaren und die andere Remissionswellenlänge 43 im infraroten Spektralbereich.

Das zweite Beispiel der möglichen Remissionsstrahlung der Lumineszenzmarke 19 ist in Fig. 2b gepunktet eingezeichnet. Auch hier liegt eine der beiden Remissionswellenlängen im Sichtbaren, und zwar entspricht diese Remissionswellenlänge der Remissionswellenlänge 41 des ersten Beispiels. Die andere Remissionswellenlänge 43' des zweiten Beispiels liegt im Infraroten, und zwar von der entsprechenden Wellenlänge 43 des ersten Beispiels spektral deutlich beabstandet.

Wie in Fig. 1 gezeigt ist, wird der Remissionsstrahl 25 innerhalb des Lumineszenztasters mittels zweier einander nachgeschalteten halbdurchlässigen Spiegel 29 in insgesamt drei Empfangslichtwege 31 aufgeteilt. Entlang jedes dieser drei Empfangslichtwege 31 durchläuft die Remissionsstrahlung 25 ein zugeordnetes Filter 33 und beaufschlagt schließlich einen jeweiligen photoelektrischen Empfänger 35. Die drei Empfänger 35 sind mit einer Auswerteschaltung 37 verbunden, die einen das Gehäuse 11 verlassenden Signalausgang 39 besitzt.

Die beiden halbdurchlässigen Spiegel 29 und die Filter 33 sorgen also dafür, daß jedem Empfangslichtweg 31 eine eigene Empfangswellenlänge 45 zugeordnet ist bzw. daß jeder Empfänger 35 auf einer anderen Empfangswellenlänge 45 detektiert. Diese drei Empfangswellenlängen 45 sind in Fig. 2c veranschaulicht, welche in Abhängigkeit von der Wellenlänge λ schematisch das von den Empfängern 35 gegebenenfalls erzeugte Empfangssignal E zeigt.

Die Empfangswellenlängen 45 und die spektrale Lage der Remissionswellenlängen 41, 43, 43' (Fig. 2b) der zu erfassenden Lumineszenzmarken 19 sind so gewählt, daß sie einander entsprechen. Für das vorstehend genannte erste Beispiel der von der Lumineszenzmarke 19 remittierten Strahlung 25 (durchgezogene Linie in Fig. 2b) werden also von den entsprechenden Empfängern 35 die beiden linken Empfangssignale gemäß Fig. 2c erzeugt. Dagegen erzeugen die jeweils entsprechenden Empfänger 35 im Falle des zweiten Beispiels die beiden äußeren Empfangssignale (in Fig. 2b gepunktet eingezeichnet).

Die Auswerteschaltung 37 (Fig. 1) überwacht die Empfänger 35 und wertet ihre Empfangssignale aus. Beispielsweise wird ein Empfangssignal dann als von einer Lumineszenzmarke 19 stammend gewertet, wenn seine Amplitude E einen bestimmten Grenzwert 47 überschreitet, der in Fig. 2c beispielhaft als horizontale Linie gezeigt ist.

Durch vorheriges Einprogrammieren der möglichen Kombinationen von Empfangssignalen, beispielsweise durch Einlernen der vorgesehenen Lumineszenzmarken 19 (teach-in), kann die Auswerteschaltung 37 das Belegungsmuster der zu den verschiedenen Empfangswellenlängen 45 erzeugten bzw. nicht erzeugten Empfangssignale (Fig. 2c) eindeutig einer einzigen Lumineszenzmarke 19 zuordnen.

Falls das innerhalb eines Detektionavorganges erhaltene Belegungsmuster der aktuell gesuchten Lumineszenzmarke entspricht, kann die Auswerteschaltung 37 an ihrem Signalausgang 39 ein Gegenstandsfeststellungssignal erzeugen. Alternativ hierzu kann die Auswertung dahingehend erfolgen, daß die Auswerteschaltung 37 eine Nummer anzeight, die der erkannten bzw. der derzeit im Überwachungsbereich 23 befindlichen Lumineszenzmarke 19 entspricht.

Während in den Fig. 2b und 2c der Einfachheit halber die Amplitude R der Remissionsstrahlung der verschiedenen Wellenlängen λ bzw. die Amplitude E der entsprechenden Empfangssignale sowie der Grenzwert 47 jeweils in gleicher Höhe dargestellt sind, können diese Amplituden für die verschiedenen Wellenlängen 41, 43, 43' in der Praxis jeweils unterschiedlich sein. Die Unterschiede der Amplituden der Empfangssignale können zur Auswertung der Empfangssignale zusätzlich oder auch alternativ zu der erläuterten Auswertung der Belegungsmuster (Fig. 2c) zur Identifizierung einer Lumineszenzmarke verwendet werden, beispielsweise durch Untersuchung des Verhältnisses zweier Amplituden E von Empfangssignalen.

Schließlich ist anzumerken, daß der in Fig. 1 gezeigte Aufbau des Lumineszenztasters lediglich beispielhaft ist. Das erläuterte Lumineszenztastverfahren kann beispielsweise auch bei einem Lumineszenztaster in Autokollimationsanordnung realisiert werden. Außerdem ist es möglich die Filter 33 in den jeweils zugeordneten Spiegel 29 zu integrieren (dichroitische Teilung).

### Bezugszeichenliste

- 11: Gehäuse
- 13: Sender
- 15: Sendestrahl
- 17: Sendelinse
- 19: Lumineszenzmarke
- 21: Gegenstand
- 23: Überwachungsbereich
- 25: Remissionsstrahl
- 27: Empfangslinse
- 29: halbdurchlässiger Spiegel
- 31: Empfangslichtweg
- 33: Filter
- 35: Empfänger
- 37: Auswerteschaltung
- 39: Signalausgang
- 41: Remissionswellenlänge
- 43: Remissionswellenlänge
- 43': Remissionswellenlänge
- 45: Empfangswellenlänge
- 47: Grenzwert
- S: Amplitudenverlauf der Sendestrahlung
- R: Amplitudenverlauf der Remissionsstrahlung
- E: Amplitudenverlauf der Empfangssignale
- UV: ultravioletter Spektralbereich
- VIS: sichtbarer Spektralbereich
- IR: infraroter Spektralbereich

## Patentansprüche

1. Verfahren zur Detektion von Lumineszenzmarken (19), wobei elektromagnetische Sendestrahlung (15) in einen Überwachungsbereich (23) ausgesendet wird, wobei ferner elektromagnetisehe Remissionsstrahlung (25), die von einer im Überwachungsbereich (23) befindlichen Lumineszenzmarke (19) remittiert wird, empfangen wird, wobei ferner in Abhängigkeit von der empfangenen Remissionsstrahlung (25) ein Empfangssignal erzeugt wird, wobei ferner das Empfangssignal ausgewertet wird, und wobei die Sendestrahlung (15) und die Remissionastrahlung (25) unterschiedliche Wellenlängen besitzen,
**dadurch gekennzeichnet**,
daß für einen Detektionsvorgang mehrere Empfangssignale erzeugt werden, die mehreren voneinander verschiedenen Empfangswellenlängen (45) entsprechen, und
daß zur Feststellung des Vorhandenseins einer Lumineszenzmarke (19) innerhalb des Überwachungsbereichs (23) die mehreren Empfangssignale ausgewertet werden.

2. Verfahren nach Anspruch 1,
**dadurch gekennzeichnet**,
daß die mehreren Empfangswellenlängen (45) der Remissionsstrahlung (25) einer oder mehrerer verschiedener zu erfassender Lumineszenzmarken (19) entsprechen.

3. Verfahren nach einem der vorherigen Ansprüche,
**dadurch gekennzeichnet**,
daß die mehreren Empfangssignale dahingehend ausgewertet werden, welche der Empfangswellenlängen (45) von der im Überwachungsbereich (23) befindlichen Lumineszenzmarke (19) remittiert werden, und/oder daß für einen Detektionsvorgang Sendestrahlung (15) mehrerer diskreter, voneinander verschiedener Sendewellenlängen ausgesendet wird und/oder daß die mehreren Empfangswellenlängen (45) von der Wellenlänge bzw. den Wellenlängen der Sendestrahlung (15) jeweils verschieden sind.

4. Verfahren nach einem der Ansprüche 1 bis 3,
**dadurch gekennzeichnet**,
daß zur Auswertung der mehreren Empfangssignale überprüft wird, ob die Amplituden der Empfangssignale jeweils einen zugeordneten Grenzwert über- und/oder unterschreiten.

5. Verfahren nach einem der Ansprüche 1 bis 3,
**dadurch gekennzeichnet**,
daß zur Auswertung der mehreren Empfangssignale überprüft wird, ob die Amplituden (E) der Empfangssignale einen gemeinsamen Grenzwert über- und/oder unterschreiten, oder daß zur Auswertung der mehreren Empfangssignale überprüft wird, ob die Amplitude wenigstens eines Empfangssignals einen Grenzwert über- und/ oder unterschreitet.

6. Verfahren nach einem der vorherigen Ansprüche,
**dadurch gekennzeichnet**,
daß zur Auswertung der mehreren Empfangssignale überprüft wird, ob das Verhältnis der Amplituden zweier Empfangssignale einen Grenzwert über- und/oder unterschreitet.

7. Verfahren nach Anspruch 6,
**dadurch gekennzeichnet**,
daß für einen Detektionsvorgang mehr als zwei den verschiedenen Empfangswellenlängen (45) entsprechende Empfangssignale erzeugt werden, und
daß die Überprüfung des Amplitudenverhältnisses für mehrere, insbesondere für alle möglichen, Paare von Empfangssignalen durchgeführt wird.

8. Verfahren nach einem der Ansprüche 1 bis 6,
**dadurch gekennzeichnet**,
daß für einen Detektionsvorgang genau zwei den verschiedenen Empfangswellenlängen (45) entsprechende Empfangssignale erzeugt werden.

9. Verfahren nach einem der vorherigen Ansprüche,
**dadurch gekennzeichnet**,
daß die Remissionsstrahlung (25) in eine der Anzahl der Empfangssignale entsprechende Anzahl von Empfangslichtwegen (31) aufgeteilt wird.

10. Verfahren nach einem der Ansprüche 1 bis 3,
**dadurch gekennzeichnet**,
daß für einen Detektionsvorgang eine Vielzahl von Empfangssignalen erzeugt wird, die einer Vielzahl von Empfangswellenlängen (45) entsprechen, welche einander innerhalb eines spektralen Empfangsbereichs kontinuierlich oder quasi-kontinuierlich benachbart sind, und
daß der Amplitudenverlauf der Empfangssignale entlang des spektralen Empfangsbereichs ausgewertet wird.

11. Verfahren nach einem der vorherigen Ansprüche,
**dadurch gekennzeichnet**,
daß die Sendestrahlung (15) und/oder die Remissionsstrahlung (25) jeweils im ultravioletten, im sichtbaren und/oder im infraroten Wellenlängenbereich (UV, VIS bzw. IR) liegen und/oder daß verschiedene Sendewellenlängen der Sendestrahlung (15) und/oder verschiedene Empfangswellenlängen (45) jeweils in verschiedenen der Wellenlängenbereiche Ultraviolett (UV), sichtbares Licht (VIS) und Infrarot (IR) liegen.

12. Lumineszenztaster zur Detektion von Lumineszenzmarken (19) nach einem Verfahren gemäß einem der vorstehenden Ansprüche,
mit wenigstens einem Sender (13) zum Aussenden einer elektromagnetischen Sendestrahlung (15) in einen Überwachungsbereich (23), wenigstens einem photoelektrischen Empfänger (35) zum Empfang einer von einer im Überwachungsbereich (23) befindlichen Lumineszenzmarke (19) remittierten elektromagnetischen Remissionsstrahlung (25), und einer Auswerteschaltung (37) zur Auswertung eines von dem Empfänger (35) abgegebenen Empfangssignals,
**dadurch gekennzeichnet**,
daß der oder die Empfänger (35) zum selektiven Empfang mehrerer voneinander verschiedener, insbesondere diskreter Empfangswellenlängen(45) sowie zur Erzeugung jeweils den verschiedenen Empfangswellenlängen (45) entsprechender Empfangssignale ausgebildet ist.

13. Lumineszenztaster nach Anspruch 12,
**dadurch gekennzeichnet**,
daß für jede Empfangswellenlänge (45) ein eigener Empfänger (35) vorgesehen ist und/oder daß der oder die Sender (13) zum selektiven Aussenden mehrerer voneinander verschiedener, insbesondere diskreter Sendewellenlängen ausgebildet sind, wobei vorzugsweise für jede Sendewellenlänge ein eigener Sender vorgesehen ist.
